(19) **Europäisches Patentamt / European Patent Office / Office européen des brevets**

(11) **EP 1 591 990 B1**

(12) **EUROPEAN PATENT SPECIFICATION**

(45) Date of publication and mention
of the grant of the patent:
**12.09.2012 Bulletin 2012/37**

(51) Int Cl.:
***G09G 3/28*** *(2006.01)*

(21) Application number: **05009089.3**

(22) Date of filing: **26.04.2005**

(54) **Display device drive apparatus and drive method**

Verfahren und Vorrichtung zur Ansteuerung einer Anzeigevorrichtung

Circuit de commande d'une module d'affichage et son procédé de commande

(84) Designated Contracting States:
**DE FR GB**

(30) Priority: **27.04.2004 JP 2004131152**

(43) Date of publication of application:
**02.11.2005 Bulletin 2005/44**

(73) Proprietor: **Panasonic Corporation**
**Kadoma-shi**
**Osaka 571-8501 (JP)**

(72) Inventors:
- **Usui, Junichi**
  **Fukuroi-shi**
  **Shizuoka (JP)**
- **Sato, Naruhiro**
  **Fukuroi-shi**
  **Shizuoka (JP)**
- **Ichikawa, Hideaki**
  **Fukuroi-shi**
  **Shizuoka (JP)**
- **Nohara, Chuichi**
  **Fukuroi-shi**
  **Shizuoka (JP)**

(74) Representative: **Klingseisen, Franz et al**
**Klingseisen & Partner**
**Bräuhausstrasse 2**
**80331 München (DE)**

(56) References cited:
**EP-A- 0 888 004**      **EP-A- 1 265 213**
**US-A1- 2001 000 217**

- **PATENT ABSTRACTS OF JAPAN vol. 1995, no. 11, 26 December 1995 (1995-12-26) -& JP 07 210109 A (PIONEER ELECTRON CORP), 11 August 1995 (1995-08-11)**
- **PATENT ABSTRACTS OF JAPAN vol. 1999, no. 13, 30 November 1999 (1999-11-30) -& JP 11 219152 A (MITSUBISHI ELECTRIC CORP), 10 August 1999 (1999-08-10)**
- **PATENT ABSTRACTS OF JAPAN vol. 1995, no. 01, 28 February 1995 (1995-02-28) -& JP 06 282241 A (PIONEER ELECTRON CORP), 7 October 1994 (1994-10-07)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a drive apparatus of a display device and the drive method therefor.

2. Description of the Related Art

In recent years, for example, display devices using a flat-panel display of a light-emission type such as a plasma display panel (hereinafter, referred to as "PDP"), an electroluminescence panel, etc. as a display of a flat-panel type are widely made as products. In these display devices, for example, a technique as shown in Japanese Patent No. 3115727 (hereinafter, referred to as patent document 1) is disclosed as a display panel drive system for improving the quality of a screen image on the panel without increasing electric power consumption of the display device.

In the prior art shown in the patent document 1, a configuration for increasing the brightness of a display area near the screen central portion of the display panel, and decreasing the brightness of the display area of a screen circumferential area is adopted. A high brightness feeling is obtained by adopting such a configuration with respect to the displayed screen image while restraining the electric power consumption utilizing the visual characteristics of a human tending to visually notice the central portion in comparison with the circumferential portion of the display screen.

However, in such a prior art, the brightness is corrected simply in accordance with the position of an area on the screen. Therefore, effects provided by the correction are plain and monotonous. Therefore, in some cases, there is little improvement in display quality depending upon a brightness distribution of a screen image, or the display quality improvement by the brightness correction is limited.

Further, there are known from EP-A-1 265 213 a display apparatus and a display method forming the basis for the preamble of appending independent claims. Especially, that document shows a display-device drive apparatus for driving a display device in accordance with a video signal and displaying a screen image on the display screen of said display device, and including: a detecting section for detecting a brightness level of the screen image of said video signal as an area brightness level for each of a plurality of display areas on said display screen; and an adjustment driving section for comparing said area brightness levels with each other and driving said display device by a driving signal representing said screen image so as to form a brightness level distribution of said screen image according to adjustment characteristics determined in accordance with the difference between the area brightness levels. Similar display apparatuses are disclosed in JP-A-07-210109 and JP-A-11-219152.

EP 08 880 004 is a prior application of the applicant and refers to a display apparatus including a plasma display panel and an automatic brightness/beam limiter.

JP 06282241 is a further former application of the applicant and refers to another plasma display panel.

SUMMARY OF THE INVENTION

The present invention is made to solve the above-mentioned problems, and provides a drive apparatus of the display device for making the brightness correction of the screen for raising the display quality in accordance with a brightness situation of the display screen image while restraining or decreasing the electric power consumption, and the dive method.

This object is attained by the subject-matter of claims 1, 2, 7 and 8.

The invention resides in a display-device drive apparatus for driving a display device in accordance with a video signal and displaying a screen image on the display screen of said display device, which includes a detecting section for detecting a brightness level of the screen image of said video signal as an area brightness level for each of a plurality of display areas on said display screen; and an adjustment driving section for comparing said area brightness levels with each other and driving said display device by a driving signal representing said screen image so as to form a brightness level distribution of said screen image according to adjustment characteristics determined in accordance with the difference between the area brightness levels, wherein the plurality of display areas include a central area of the display screen and a circumferential area with respect to the central area; and wherein the adjustment driving section adjusts the video signal so as to increase the brightness of one area, when the area brightness level of the one area among the plurality of display areas is higher than the area brightness levels of the other areas.

The invention also resides in a display driving method in a display-device drive apparatus for driving a display device in accordance with a video signal and displaying a screen image on the display screen of said display device, which includes a detecting step for detecting a brightness level of the screen image of said video signal as an area brightness level for each of a plurality of display areas on said display screen; and an adjustment driving step for comparing said area brightness levels with each other and driving said display device by a driving signal representing said screen image so as to form a brightness level distribution of said screen image according to adjustment characteristics determined in accordance with the difference between the area brightness levels, wherein the plurality of display areas include a central area of the display screen and a circumferential area with respect to the central area; and wherein the adjustment driving section adjusts the video signal so as to increase the brightness of one area, when the area brightness level of the one area among the plurality of display areas is higher than the area brightness levels of the other areas.

BRIEF DESCRIPTION OF THE DRAWINGS

Fig. 1 is a block diagram showing the configuration of a display panel drive apparatus according to a first embodiment of the present invention;

Fig. 2 is an explanatory view showing one example of area division on the screen at a brightness information detecting time of each area of the display screen;

Fig. 3 is a first explanatory view for illustrating a brightness correcting operation in the first embodiment of the present invention;

Fig. 4 is a second explanatory view for illustrating the brightness correcting operation in the first embodiment of the present invention;

Fig. 5 is a third explanatory view for illustrating the brightness correcting operation in the first embodiment of the present invention;

Fig. 6 is an explanatory view showing a first application example in the first embodiment of the present invention;

Fig. 7 is an explanatory view showing a second application example in the first embodiment of the present invention;

Fig. 8 is a first explanatory view for illustrating a brightness correcting operation in a second embodiment of the present invention; and

Fig. 9 is a second explanatory view for illustrating the brightness correcting operation in the second embodiment of the present invention.

DETAILED DESCRIPTION OF THE INVENTION

[Embodiment 1]

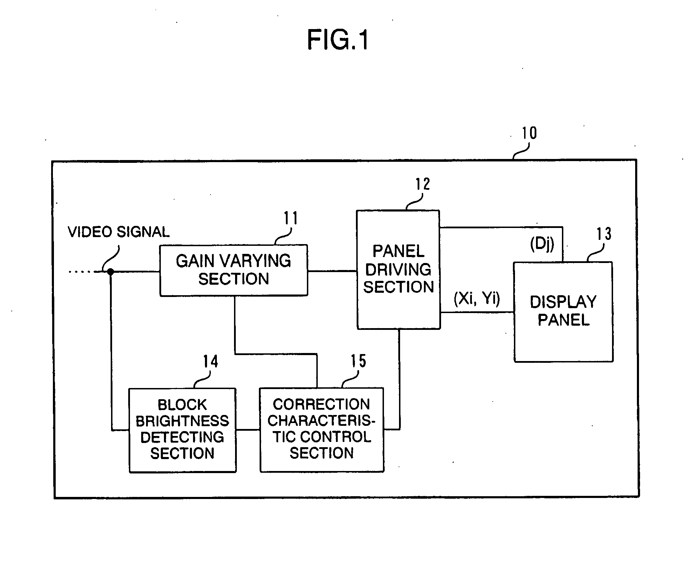

Fig. 1 shows a drive apparatus of a display panel according to a first embodiment of the present invention.

In Fig. 1, the display panel drive apparatus 10 may be, for example, a digital broadcast receiver of a wall hanging type, and may be also a thin-panel display device provided in an audio visual system. Otherwise, the display panel drive apparatus 10 may be also a display device provided in an in-car equipment such as a car navigation device, etc.

With respect to an input video signal, a gain varying section 11 is a circuit for making a brightness correction of the video signal by multiplying a predetermined gain on the basis of commands from a correction characteristic control section 15 described later. Such correction processing can be performed by setting a different correction value of the gain for each area of a display screen.

A panel driving section 12 includes a circuit for generating pixel data for display in a display panel 13 from the video signal corrected in brightness in the gain varying section 11, and also includes a circuit such as a frame memory, etc. for once accumulating such pixel data over one to several frames. The panel driving section 12 also generates a driving pulse as a driving signal synchronized with a synchronous signal included in the video signal and operating each pixel of the display panel 13 in accordance with the pixel data. Accordingly, various kinds of driver circuits for operating each electrode included in the display panel 13 by these driving pulses, and a control circuit of such drivers are also included in the panel driving section 12.

For example, the display panel 13 is a thin-panel display such as a PDP, and has row electrodes X1 to Xn and row electrodes Y1 to Yn constituting row electrode pairs corresponding to respective rows (first to n-th rows) on the screen in one pair of an X-electrode and a Y-electrode . Further, the display panel 13 is provided with column electrodes D1 to Dm corresponding to respective columns (first to m-th columns) on the screen and perpendicular to the above row electrode pairs, and unillustrated dielectric layers and discharge spatial layers are provided therebetween. One display cell C(i, j) is formed in a intersecting portion of one pair of row electrodes (Xi, Yi) and one column electrode Dj. Each electrode of the display panel 13 is connected to various kinds of driver circuits of the panel driving section 12, and is operated by the driving pulses supplied from the driver circuits.

The detailed configuration of the display panel 13 is similar to that of the display panel shown, for example, in the above patent document 1.

On the other hand, a block brightness detecting section 14 (hereinafter, simply referred to as a "detecting section 14") is a section for detecting brightness information in each area of the display screen. Various parameters can be used as such brightness information. However, in this embodiment, APL (Average Pulse Level) representing an average brightness level of the video signal within a unit display period is used.

A correction characteristic control section 15 (hereinafter, simply referred to as a "control section 15") is a section for controlling correction characteristics with respect to the brightness of the input video signal on the basis of a detection result of the detecting section 14. In the control of the correction characteristics, the brightness gain in the gain varying section 11 may be adjusted, or a pulse rate of the driving pulse in the panel driving section 12 may be adjusted.

Next, the operation of the display panel drive apparatus in the embodiment will be described.

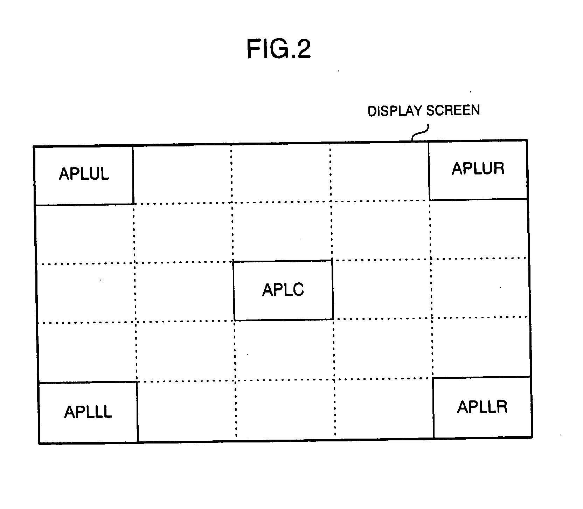

First, with respect to one screen of the input video signal, the detecting section 14 detects APL representing the brightness information with respect to each area obtained by dividing the screen into a plurality of areas. When dividing the screen, one screen is divided into five areas, for example, with respect to each of the horizontal and vertical directions as shown in Fig. 2, hence the screen is divided into 25 areas. In this embodiment, the brightness information for five portions (hereinafter, also referred to as "blocks") constructed by the blocks at four corners and the center of the screen.

Namely, the detecting section 14 detects the brightnesses of the blocks at left, right, upper and lower corners of the screen as APLUL, APLUR, APLLL and APLLR. The brightness $APL_{LOCAL}$ of a circumferential portion of the screen is calculated as

$$APL_{LOCAL} = (APLUL + APLUR + APLLL + APLLR)/4.$$

The calculating method of $APL_{LOCAL}$ is not limited to such a technique. For example, all the APLs in each block of a screen outer circumferential edge are added together and may be divided by a block number of the outer circumferential edge. Otherwise, the APLs of respective central portion blocks of the screen four corners and the screen outer circumference are added together and may be divided into eight portions and $APL_{LOCAL}$ may be calculated.

Further, the detecting section 14 detects the brightness in the block of the screen center as a central portion brightness $APL_{CENTER}$. With respect to the detection of $APL_{CENTER}$, $APL_{CENTER}$ may be also calculated by including APLs of a plurality of blocks surrounding the block of the screen central portion instead of simple use of only one block of the central portion.

The control section 15 performs the following control of the correction characteristics of a brightness gain on the basis of the detecting result of the brightness information using the detecting section 14.

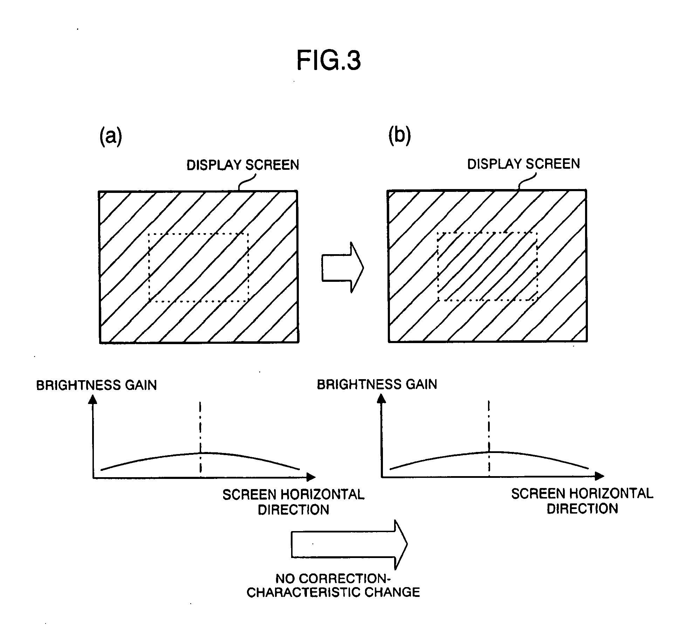

First, when the difference between $APL_{CENTER}$ and $APL_{LOCAL}$ is equal to or less than a predetermined threshold value, the control section 15 sends to the gain varying section 11 commands for executing the correction characteristics of the brightness gain set in advance in the gain varying section 11. The brightness gain correction in the gain varying section 11 in this case will be schematically described in Fig. 3. The brightness correction characteristic of a so-called "circumferential portion brightness drop" as shown as shown in the lower portions of (a) and (b) of Fig. 3 is set as a reference correction characteristic in advance in the gain varying section 11.

The correction using the "circumferential portion brightness drop" is a correction in which the brightness gain of the circumferential portion of the screen is set to be lower than that of the central portion of the screen. A high brightness feeling can be added by making such a correction with respect to the display screen image on the screen while restraining electric power consumption by utilizing a visual tendency of a human in which the human is likely to notice the screen central portion in comparison with the screen circumferential portion. The brightness gain correction shown in Fig. 3 illustrates only in the horizontal direction of the screen, but a correction characteristic having a similar tendency is also set with respect to the vertical direction.

More specifically, as shown in (a) of Fig. 3, when the difference in brightness between the central portion and the circumferential portion in the brightness distribution over the screen is small, the correction of the "circumferential portion brightness drop" using the reference correction characteristics is made by the gain varying section 11, and the brightness distribution of the screen after the correction has the shape shown in (b) of Fig. 3. In Fig. 3, the density of hatching on the screen schematically shows the brightness difference.

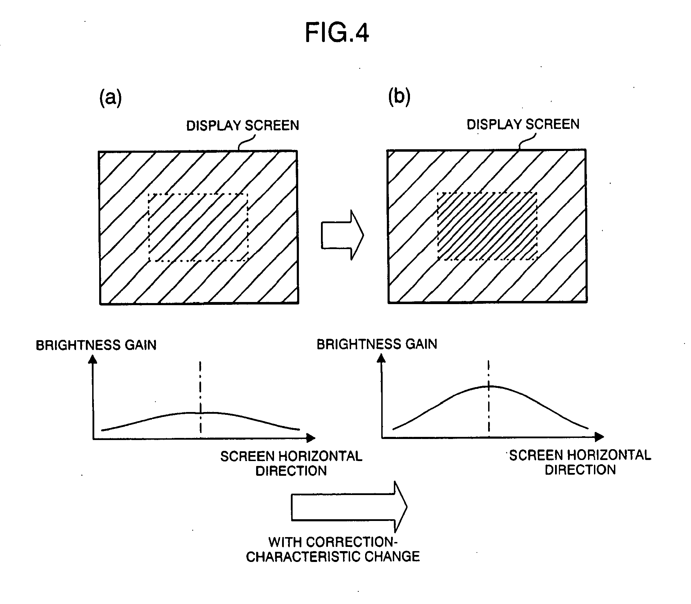

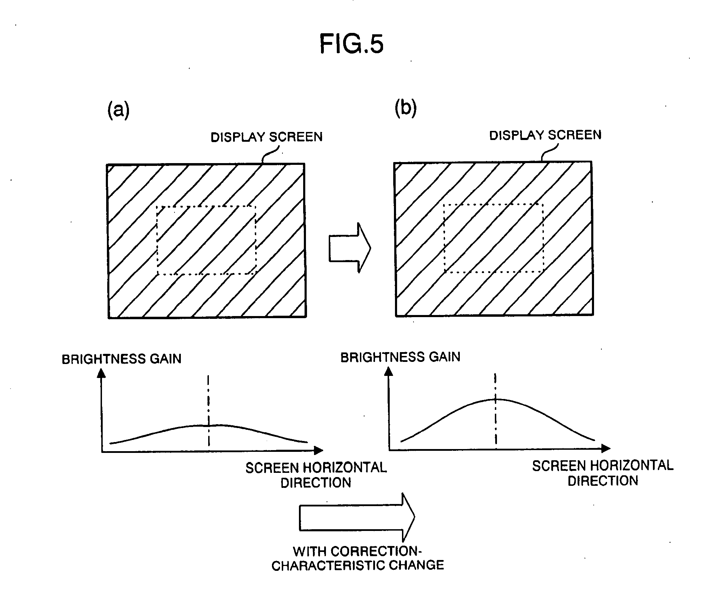

In contrast to this, when the difference between $APL_{CENTER}$ and $APL_{LOCAL}$ exceeds the predetermined threshold value, the control section 15 sends commands to the gain varying section 11 for changing the reference correction characteristics set in the gain varying section 11. A correction of the brightness gain in this case will be described based on Figs. 4 and 5.

Namely, as shown in (a) of Fig. 4, when the brightness of the central portion of the screen is a large value exceeding the predetermined threshold value in comparison with the brightness of the circumferential portion, the control section 15 further increases the brightness gain deviation of the reference correction characteristics under the screen in (b) of Fig. 4, and sends commands for control for providing the correction characteristics as shown in the lower part of (b) of Fig. 4 to the gain varying section 11. Thus, in the brightness distribution of the screen shown in (a) of Fig. 4, the brightness of the screen central portion is further emphasized and the brightness distribution of the screen as shown in (b) of Fig. 4 is attained.

On the contrary, as shown in (a) of Fig. 5, the correction characteristic is also similarly changed with respect to a case in which the brightness of the central portion of the screen is smaller than a predetermined threshold value in comparison with the brightness of the circumferential portion. Thus, as shown in (b) of Fig. 5, the brightness of the central portion of the screen is increased in comparison with that before the correction, and a high brightness feeling as the entire screen is obtained.

In the above description, the screen brightness correction is performed by correcting the brightness gain in the gain varying section 11 as an example. However, the present invention is not limited to such. For example, the control section 15 may alsomake the brightness correction by controlling a mode of the driving pulse for the panel driving section 12. Namely, the control section 15 may also make the brightness correction on the screen by giving control commands for adjusting a parameter with respect to the driving signal such as a repeating frequency, a pulse width, etc. of a discharge maintaining pulse to the panel driving section 12.

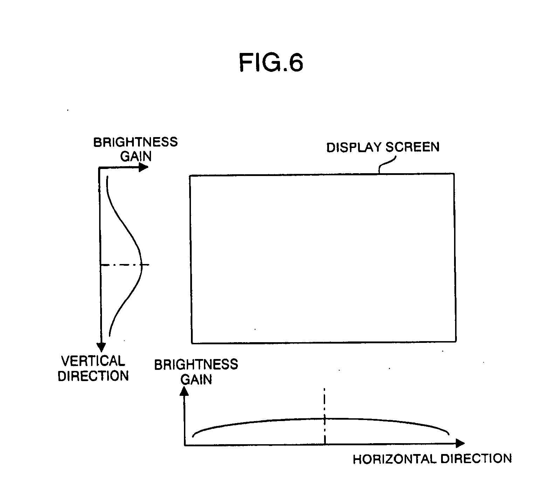

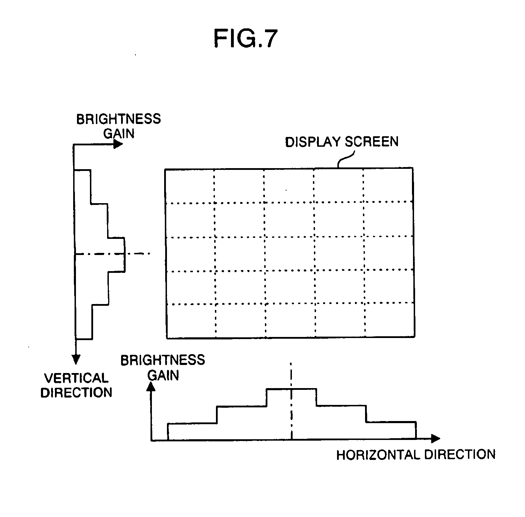

As shown in Fig. 6, different correction characteristics are set with respect to each of the horizontal and vertical directions of the screen, and the correction characteristics may be also independently changed in accordance with the brightness difference between blocks in each of the horizontal and vertical directions. Further, the correction characteristics may be also set with an arbitrary area of the screen as a reference instead of the correction characteristics of the brightness with the central portion of the display screen as a reference. In the above description, the correction characteristics are shown by a waveform continuously changed in the horizontal to vertical directions. However, for example, as shown in Fig. 7, correction characteristics having a brightness gain stepwise changed every each block in the horizontal to vertical directions may be also set.

As described above, in accordance with the embodiment, when the brightness difference between the central portion and the circumferential portion of the screen is equal to or less than a predetermined threshold value in the display device having the correction characteristics of the circumferential brightness drop, the correction using the normal circumferential brightness drop is made. In contrast to this, when the brightness difference between the central portion and the circumferential portion exceeds the threshold value, the correction for emphasizing the brightness of the screen central portion is made. Therefore, a high brightness feeling can be given to a user while restraining electric power consumption.

[Embodiment 2]

Next, a second embodiment of the present invention will be described. The configuration of a display panel drive apparatus in this embodiment is similar to that in the first embodiment and its description and explanation are therefore omitted.

In this embodiment, the correction characteristics are changed in accordance with the brightness difference between respective blocks on the screen similarly to the first embodiment. However, the correction characteristics of the circumferential brightness drop are not adjusted as in the first embodiment, but the feature of the embodiment is in that the display quality of a screen image is improved while restraining electric power consumption by emphasizing the contrast of each area.

The operation of the display panel drive apparatus in this embodiment will be described as follows.

First, the detecting section 14 detects brightness information on the screen, and detects the brightness $APL_{LOCAL}$ of a circumferential portion and the brightness $APL_{CENTER}$ of a central portion. The calculating method of $APL_{LOCAL}$ and $APL_{CENTER}$ is set similarly to that in the first embodiment.

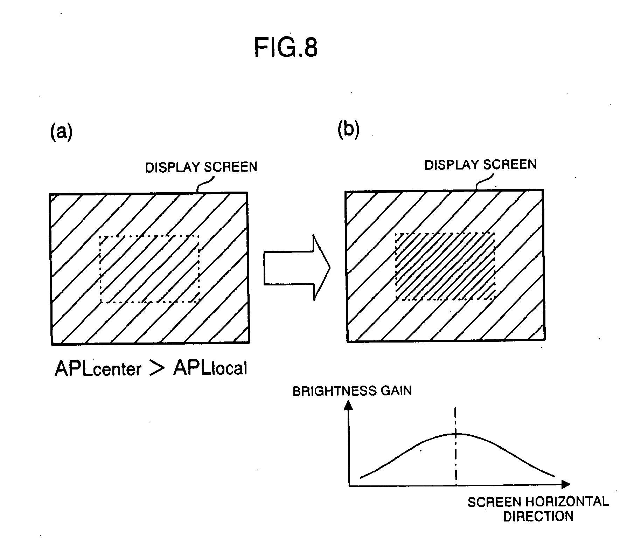

When the brightness of the screen central portion is larger than that of the screen circumferential portion as shown in (a) of Fig. 8 in a detecting result in the detecting section 14, i.e., when

$$APL_{CENTER} > APL_{LOCAL},$$

the control section 15 gives commands for control for making a correction for increasing the brightness gain of the screen central portion and reducing the brightness gain of the screen circumferential portion to the gain varying section 11. An image of the correction characteristics at this time is shown under the screen in (a) of Fig. 8. The brightness distribution of the screen after the correction attains the state shown in (b) of Fig. 8 by such a correction, and the contrast between the brightness of the screen central portion and the brightness of the circumferential portion is further clarified.

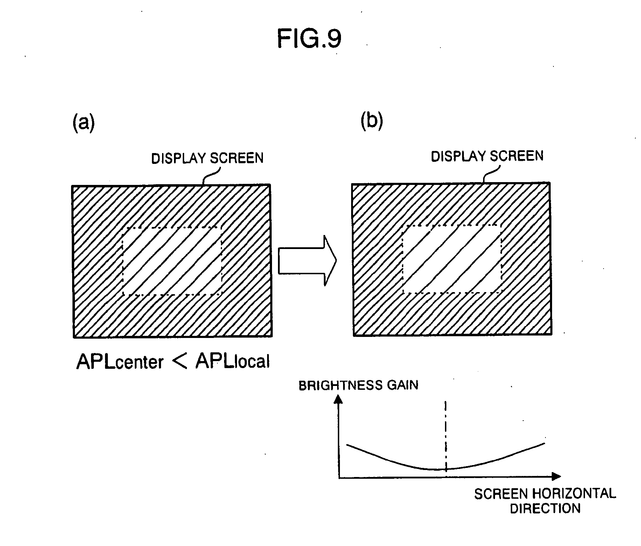

In contrast to this, when the brightness of the screen central portion is lower than the brightness of the screen circumferential portion as shown in (a) of Fig. 9 in the detecting result in the detecting section 14, i.e.,

$$APL_{CENTER} < APL_{LOCAL},$$

the control section 15 sends commands for control for making a correction for reducing the brightness gain of the screen central portion and increasing the brightness gain of the screen circumferential portion to the gain varying section 11. The correction characteristics at this time is schematically shown in (b) of Fig. 9. The brightness distribution of the screen after the correction attains the state shown in (b) of Fig. 9 by such a correction, and the contrast between the brightness of the central portion of the screen and the brightness of the circumferential portion is further clarified.

The brightness gain correction shown in Figs. 8 and 9 is shown only in the horizontal direction of the screen, but a correction characteristic having a similar tendency is also set in the vertical direction of the screen.

In this embodiment, the brightness difference between the central portion and the circumferential portion of the screen is further emphasized by making such a correction, and the contrast of the display image is strengthened. Therefore, a high brightness feeling can be given to a user while restraining electric power consumption.

In the above explanation, the screen brightness is controlled by adjusting the brightness gain in the gain varying section 11 as an example. However, the present invention is not limited to such an example. For example, the control section 15 may also control the brightness by giving commands for controlling the driving pulse with respect to the panel driving section 12. Namely, the control section 15 may also make the brightness correction on the screen by giving commands for control for adjusting a parameter with respect to the driving signal such as a repeating frequency, a pulse width, etc. of a discharge maintaining pulse to the panel driving section 12.

Further, different correction characteristics are set with respect to each of the horizontal direction and the vertical direction of the screen, and the correction characteristics may be also independently changed in accordance with the brightness difference between blocks in each of the horizontal and vertical directions. Further, the correction characteristics with an arbitrary area of the screen as a reference may be also set instead of the correction characteristics of the brightness with the central portion of the display screen as a reference. Further, in the above explanation, the correction characteristics are shown by a waveform continuously changed. However, for example, correction characteristics having a brightness gain stepwise changed every each block may be also set.

The invention has been described with reference to the preferred embodiments thereof. It should be understood by those skilled in the art that a variety of alterations and modifications may be made from the embodiments described above. It is therefore contemplated that the appended claims encompass all such alterations and modifications.

## Claims

1. A display-device drive apparatus for driving a display device (13) in accordance with a video signal and displaying a screen image on the display screen of said display device, and including:

   a detecting section (14) for detecting a brightness level of the screen image of said video signal as an area brightness level for each of a plurality of display areas on said display screen and for calculating a brightness level of a central portion comprising at least one of said areas and a circumferential portion with respect to said central portion comprising at least one of said areas; and
   an adjustment driving section (12, 15) for comparing said portion brightness levels with each other and driving said display device by a driving signal representing said screen image, which brightness has been corrected in accordance with the difference between the calculated portion brightness levels, wherein:

   when the absolute value of the difference between the calculated brightness levels of the circumferential portion and the central portion is lower than a predetermined threshold value, the adjustment driving section applies a brightness correction such that the correction factor applied to the central portion is higher than the correction factor applied to the circumferential portion; and
   when the absolute value of the difference between the calculated brightness levels of the circumferential portion and the central portion is higher than a predetermined threshold value the adjustment driving section applies a brightness correction such that the difference between the correction factor applied to the central portion and the correction factor applied to the circumferential portion is further increased.

2. A display-device drive apparatus for driving a display device (13) in accordance with a video signal and displaying a screen image on the display screen of said display device, and including:

   a detecting section (14) for detecting a brightness level of the screen image of said video signal as an area brightness level for each of a plurality of display areas on said display screen and for calculating a brightness level of a central portion comprising at least one of said areas and a circumferential portion with respect to said central portion comprising at least one of said areas; and
   an adjustment driving section (12, 15) for comparing said portion brightness levels with each other and driving said display device by a driving signal representing said screen image, which brightness has been corrected in accordance with the difference between the calculated portion brightness levels, wherein:

when the calculated brightness level of one portion is higher than the calculated brightness level of the other portion, the adjustment driving section adjusts said video signal so as to increase the brightness of the calculated brighter level portion while decreasing the brightness of the other portion.

3. The display-device drive apparatus according to claim 1 or 2, wherein said adjustment driving section (12, 15) adjusts so as to decrease the brightnesses of the circumferential areas, when the level difference between the brightness levels of the circumferential areas and the central area is less than a predetermined threshold value.

4. The display-device drive apparatus according to claim 1 or 2, wherein said adjustment driving section adjusts so as to increase the brightness of the central area, when the level difference between the brightness of the circumferential area and the central area is equal to or more than a predetermined threshold value.

5. The display-device drive apparatus according to claim 1 or 2, wherein the brightness of the circumferential area is the average value of the brightnesses of the circumferential areas of the central area.

6. The display-device drive apparatus according to claim 1 or 2, wherein said detecting section detects an APL value for each of said plurality of display areas as said area brightness level, the APL value representing an average brightness level of the video signal within a unit display period.

7. A display driving method in a display-device drive apparatus for driving a display device in accordance with a video signal and displaying a screen image on the display screen of said display device, the display driving method including:

a detecting step for detecting a brightness level of the screen image of said video signal as an area brightness level for each of a plurality of display areas on said display screen and for calculating a brightness level of a central portion comprising at least one of said areas and a circumferential portion with respect to said central portion comprising at least one of said areas; and
an adjustment driving step for comparing said portion brightness levels with each other and driving said display device by a driving signal representing said screen image which brightness has been corrected in accordance with the difference between the calculated portion brightness levels, wherein:

when the absolute value of the difference between the calculated brightness levels of the circumferential portion and the central portion is lower than a predetermined threshold value, the adjustment driving section applies a brightness correction such that the correction factor applied to the central portion is higher than the correction factor applied to the circumferential portion; and
when the absolute value of the difference between the calculated brightness levels of the circumferential portion and the central portion is higher than a predetermined threshold value the adjustment driving section applies a brightness correction such that the difference between the correction factor applied to the central portion and the correction factor applied to the circumferential portion is further increased.

8. A display driving method in a display-device drive apparatus for driving a display device in accordance with a video signal and displaying a screen image on the display screen of said display device, the display driving method including:

a detecting step for detecting a brightness level of the screen image of said video signal as an area brightness level for each of a plurality of display areas on said display screen and for calculating a brightness level of a central portion comprising at least one of said areas and a circumferential portion with respect to said central portion comprising at least one of said areas; and
an adjustment driving step for comparing said portion brightness levels with each other and driving said display device by a driving signal representing said screen image, which brightness has been corrected in accordance with the difference between the calculated portion brightness levels, wherein:

when the calculated brightness level of one portion is higher than the calculated brightness level of the other portion, the adjustment driving section adjusts said video signal so as to increase the brightness of the calculated brighter level portion while decreasing the brightness of the other portion.

**Patentansprüche**

1. Anzeigeeinrichtungs-Treibervorrichtung zum Betreiben einer Anzeigeeinrichtung (13) in Übereinstimmung mit einem Videosignal und zum Anzeigen eines Schirmbildes auf dem Anzeigeschirm der Anzeigeeinrichtung, und enthaltend:

einen Erfassungsabschnitt (14) zum Erfassen eines Helligkeitsniveaus des Schirmbildes des Videosignals als ein Bereichs-Helligkeitsniveau für jeden von einer Mehrzahl von Anzeigebereichen auf dem Anzeigeschirm und zum Berechnen eines Helligkeitsniveaus eines zentralen Abschnitts umfassend zumindest einen der Bereiche und eines umfänglichen Abschnitts bezüglich des zentralen Abschnitts, der zumindest einen der Bereiche umfasst; und

einen Einstellbetreibeabschnitt (12, 15) zum Vergleichen der Abschnitts-Helligkeitsniveaus miteinander und zum Betreiben der Anzeigeeinrichtung durch ein Betreibesignal, welches das Schirmbild repräsentiert, wobei die Helligkeit in Übereinstimmung mit dem Unterschied zwischen den berechneten Abschnitt-Helligkeitsniveaus korrigiert wurde, wobei:

wenn der Absolutwert des Unterschieds zwischen den berechneten Helligkeitsniveaus des umfänglichen Abschnitts und des zentralen Abschnitts niedriger als ein vorbestimmter Schwellenwert ist, der Einstellbetreibeabschnitt eine Helligkeitskorrektur derart anwendet, dass der Korrekturfaktor, der an dem zentralen Abschnitt angewandt wird, höher als der Korrekturfaktor ist, der an dem umfänglichen Abschnitt angewandt wird; und

wenn der Absolutwert des Unterschieds zwischen den berechneten Helligkeitsniveaus des umfänglichen Abschnitts und des zentralen Abschnitts höher als ein vorbestimmter Schwellenwert ist, der Einstellbetreibeabschnitt eine Helligkeitskorrektur derart anwendet, dass der Unterschied zwischen dem Korrekturfaktor, der auf den zentralen Abschnitt angewandt wird, und dem Korrekturfaktor, der auf den umfänglichen Abschnitt angewandt wird, weiter erhöht wird.

2. Anzeigeeinrichtungs-Treibervorrichtung zum Betreiben einer Anzeigeeinrichtung (13) in Übereinstimmung mit einem Videosignal und zum Anzeigen eines Schirmbildes auf dem Anzeigeschirm der Anzeigeeinrichtung, und enthaltend:

einen Erfassungsabschnitt (14) zum Erfassen eines Helligkeitsniveaus des Schirmbildes des Videosignals als ein Bereichs-Helligkeitsniveau für jeden von einer Mehrzahl von Anzeigebereichen auf dem Anzeigeschirm und zum Berechnen eines Helligkeitsniveaus eines zentralen Abschnitts umfassend zumindest einen der Bereiche und eines umfänglichen Abschnitts bezüglich des zentralen Abschnitts, der zumindest einen der Bereiche umfasst; und

einen Einstellbetreibeabschnitt (12, 15) zum Vergleichen der Abschnitts-Helligkeitsniveaus miteinander und zum Betreiben der Anzeigeeinrichtung durch ein Betreibesignal, welches das Schirmbild repräsentiert, wobei die Helligkeit in Übereinstimmung mit dem Unterschied zwischen den berechneten Abschnitt-Helligkeitsniveaus korrigiert wurde, wobei:

wenn das berechnete Helligkeitsniveau von einem Abschnitt höher als das berechnete Helligkeitsniveau des anderen Abschnitts ist, der Einstellbetreibeabschnitt das Videosignal dahingehend einstellt, die Helligkeit des berechneten helleren Niveau-Abschnitts zu erhöhen, während er die Helligkeit des anderen Abschnitts senkt.

3. Anzeigeeinrichtungs-Treibervorrichtung nach Anspruch 1 oder 2, wobei der Einstellbetreibeabschnitt (12, 15) dahingehend einstellt, die Helligkeiten der umfänglichen Bereiche zu senken, wenn der Niveauunterschied zwischen den Helligkeitsniveaus der umfänglichen Bereiche und des zentralen Bereichs kleiner als ein vorbestimmter Schwellenwert ist.

4. Anzeigeeinrichtungs-Treibervorrichtung nach Anspruch 1 oder 2, wobei der Einstellbetreibeabschnitt dahingehend einstellt, die Helligkeit des zentralen Bereichs zu erhöhen, wenn der Niveauunterschied zwischen der Helligkeit des umfänglichen Bereichs und des zentralen Bereichs gleich oder größer einem vorbestimmten Schwellenwert ist.

5. Anzeigeeinrichtungs-Treibervorrichtung nach Anspruch 1 oder 2, wobei die Helligkeit des umfänglichen Bereichs der Durchschnittswert der Helligkeiten der umfänglichen Bereiche und des zentralen Bereichs ist.

6. Anzeigeeinrichtungs-Treibervorrichtung nach Anspruch 1 oder 2, wobei der Erfassungsabschnitt einen APL-Wert für jeden von der Mehrzahl von Anzeigebereichen als das Bereichs-Helligkeitsniveau erfasst, wobei der APL-Wert ein Durchschnitts-Helligkeitsniveau des Videosignals innerhalb einer Einheits-Anzeigeperiode repräsentiert.

7. Anzeigebetreibeverfahren in einer Anzeigeeinrichtungs-Treibervorrichtung zum Betreiben einer Anzeigeeinrichtung in Übereinstimmung mit einem Videosignal und zum Anzeigen eines Schirmbildes auf dem Anzeigeschirm der Anzeigeeinrichtung, wobei das Anzeigebetreibeverfahren enthält:

einen Erfassungsschritt zum Erfassen eines Helligkeitsniveaus des Schirmbildes des Videosignals als ein Bereichs-Helligkeitsniveau für jeden der Mehrzahl von Anzeigebereichen auf dem Anzeigeschirm und zum Berechnen eines Helligkeitsniveaus eines zentralen Abschnitts umfassend zumindest einen von den Bereichen und eines umfänglichen Abschnitts bezüglich dem zentralen Abschnitt, der zumindest einen der Bereiche umfasst; und

einen Einstellbetreibeschritt zum Vergleichen der Abschnitts-Helligkeitsniveaus miteinander und zum Betreiben der Anzeigeeinrichtung durch ein Betreibesignal, welches das Schirmbild repräsentiert, wobei die Helligkeit in Übereinstimmung mit dem Unterschied zwischen den berechneten Abschnitts-Helligkeitsniveaus korrigiert wurde, wobei:

wenn der Absolutwert des Unterschieds zwischen den berechneten Helligkeitsniveaus des umfänglichen Abschnitts und des zentralen Abschnitts niedriger als ein vorbestimmter Schwellenwert ist, der Einstellbetreibeabschnitt eine Helligkeitskorrektur derart anwendet, dass der Korrekturfaktor, der an dem zentralen Abschnitt angewandt wird, höher als der Korrekturfaktor ist, der an dem umfänglichen Abschnitt angewandt wird; und

wenn der Absolutwert des Unterschieds zwischen den berechneten Helligkeitsniveaus des umfänglichen Abschnitts und des zentralen Abschnitts höher als ein vorbestimmter Schwellenwert ist, der Einstellbetreibeabschnitt eine Helligkeitskorrektur derart anwendet, dass der Unterschied zwischen dem Korrekturfaktor, der auf den zentralen Abschnitt angewandt wird, und dem Korrekturfaktor, der auf den umfänglichen Abschnitt angewandt wird, weiter erhöht wird.

8. Anzeigebetreibeverfahren in einer Anzeigeeinrichtungs-Treibervorrichtung zum Betreiben einer Anzeigeeinrichtung in Übereinstimmung mit einem Videosignal und zum Anzeigen eines Schirmbildes auf dem Anzeigeschirm der Anzeigeeinrichtung, wobei das Anzeigebetreibeverfahren enthält:

einen Erfassungsschritt zum Erfassen eines Helligkeitsniveaus des Schirmbildes des Videosignals als ein Bereichs-Helligkeitsniveau für jeden der Mehrzahl von Anzeigebereichen auf dem Anzeigeschirm und zum Berechnen eines Helligkeitsniveaus eines zentralen Abschnitts, umfassend zumindest einen von den Bereichen und eines umfänglichen Abschnitts bezüglich dem zentralen Abschnitt, der zumindest einen der Bereiche umfasst; und

einen Einstellbetreibeschritt zum Vergleichen der Abschnitts-Helligkeitsniveaus miteinander und zum Betreiben der Anzeigeeinrichtung durch ein Betreibesignal, welches das Schirmbild repräsentiert, wobei die Helligkeit in Übereinstimmung mit dem Unterschied zwischen den berechneten Abschnitts-Helligkeitsniveaus korrigiert wurde, wobei:

wenn das berechnete Helligkeitsniveau von einem Abschnitt höher als das berechnete Helligkeitsniveau des anderen Abschnitts ist, der Einstellbetreibeabschnitt das Videosignal derart einstellt, dass die Helligkeit des berechneten helleren Niveau-Abschnitts erhöht wird, während er die Helligkeit des anderen Abschnitts senkt.

**Revendications**

1. Appareil de commande de dispositif d'affichage pour commander un dispositif d'affichage (13) en fonction d'un signal vidéo et afficher une image d'écran sur l'écran d'affichage dudit dispositif d'affichage, et comprenant :

une section de détection (14) pour détecter un niveau de luminosité de l'image d'écran dudit signal vidéo en tant que niveau de luminosité de zone pour chacune d'une pluralité de zones d'affichage sur ledit écran d'affichage et pour calculer un niveau de luminosité d'une portion centrale comprenant au moins l'une desdites zones et d'une portion circonférentielle par rapport à ladite portion centrale comprenant au moins l'une desdites zones ; et

une section de commande d'ajustement (12, 15) pour comparer lesdits niveaux de luminosité de portion entre eux et commander ledit dispositif d'affichage par un signal de commande représentant ladite image d'écran dont la luminosité a été corrigée en fonction de la différence entre les niveaux de luminosité de portion calculés, dans lequel :

lorsque la valeur absolue de la différence entre les niveaux de luminosité calculés de la portion circonférentielle et de la portion centrale est inférieure à une valeur de seuil prédéterminée, la section de commande d'ajustement applique une correction de luminosité de sorte que le facteur de correction appliqué à la portion centrale soit supérieur au facteur de correction appliqué à la portion circonférentielle ; et

lorsque la valeur absolue de la différence entre les niveaux de luminosité calculés de la portion circonférentielle et de la portion centrale est supérieure à une valeur de seuil prédéterminée, la section de commande d'ajustement applique une correction de luminosité de sorte que la différence entre le facteur de correction appliqué à la portion centrale et le facteur de correction appliqué à la portion circonférentielle soit en outre accrue.

2. Appareil de commande de dispositif d'affichage pour commander un dispositif d'affichage (13) en fonction d'un signal vidéo et afficher une image d'écran sur l'écran d'affichage dudit dispositif d'affichage, et comprenant :

une section de détection (14) pour détecter un niveau de luminosité de l'image d'écran dudit signal vidéo en tant que niveau de luminosité de zone pour chacune d'une pluralité de zones d'affichage sur ledit écran d'affichage et pour calculer un niveau de luminosité d'une portion centrale comprenant au moins l'une desdites zones et d'une portion circonférentielle par rapport à ladite portion centrale comprenant au moins l'une desdites zones ; et

une section de commande d'ajustement (12, 15) pour comparer lesdits niveaux de luminosité de portion entre eux et commander ledit dispositif d'affichage par un signal de commande représentant ladite image d'écran dont la luminosité a été corrigée en fonction de la différence entre les niveaux de luminosité de portion calculés, dans lequel :

lorsque le niveau de luminosité calculé d'une portion est supérieur au niveau de luminosité calculé de l'autre portion, la section de commande d'ajustement ajuste ledit signal vidéo de manière à accroître la luminosité de la portion de niveau de luminosité supérieur calculé tout en réduisant la luminosité de l'autre portion.

3. Appareil de commande de dispositif d'affichage selon la revendication 1 ou 2, dans lequel ladite section de commande d'ajustement (12, 15) ajuste de manière à réduire les luminosités des zones circonférentielles, lorsque la différence de niveau entre les niveaux de luminosité des zones circonférentielles et de la zone centrale est inférieure à une valeur de seuil prédéterminée.

4. Appareil de commande de dispositif d'affichage selon la revendication 1 ou 2, dans lequel ladite section de commande d'ajustement ajuste de manière à accroître la luminosité de la zone centrale, lorsque la différence de niveau entre la luminosité de la zone circonférentielle et la luminosité de la zone centrale est supérieure ou égale à une valeur de seuil prédéterminée.

5. Appareil de commande de dispositif d'affichage selon la revendication 1 ou 2, dans lequel la luminosité de la zone circonférentielle est la valeur moyenne des luminosités des zones circonférentielles de la zone centrale.

6. Appareil de commande de dispositif d'affichage selon la revendication 1 ou 2, dans lequel ladite section de détection détecte une valeur APL pour chacune de ladite pluralité de zones d'affichage en tant que ledit niveau de luminosité de zone, la valeur APL représentant un niveau de luminosité moyen du signal vidéo au cours d'une période d'affichage unitaire.

7. Procédé de commande d'affichage dans un appareil de commande de dispositif d'affichage pour commander un dispositif d'affichage en fonction d'un signal vidéo et afficher une image d'écran sur l'écran d'affichage dudit dispositif d'affichage, le procédé de commande d'affichage comprenant :

une étape de détection pour détecter un niveau de luminosité de l'image d'écran dudit signal vidéo en tant que niveau de luminosité de zone pour chacune d'une pluralité de zones d'affichage sur ledit écran d'affichage et pour calculer un niveau de luminosité d'une portion centrale comprenant au moins l'une desdites zones et d'une portion circonférentielle par rapport à ladite portion centrale comprenant au moins l'une desdites zones ; et

une étape de commande d'ajustement pour comparer lesdits niveaux de luminosité de portion entre eux et commander ledit dispositif d'affichage par un signal de commande représentant ladite image d'écran dont la luminosité a été corrigée en fonction de la différence entre les niveaux de luminosité de portion calculés, dans lequel :

lorsque la valeur absolue de la différence entre les niveaux de luminosité calculés de la portion circonférentielle et de la portion centrale est inférieure à une valeur de seuil prédéterminée, la section de commande d'ajustement applique une correction de luminosité de sorte que le facteur de correction appliqué à la portion centrale soit supérieur au facteur de correction appliqué à la portion circonférentielle ; et

lorsque la valeur absolue de la différence entre les niveaux de luminosité calculés de la portion circonférentielle et de la portion centrale est supérieure à une valeur de seuil prédéterminée, la section de commande d'ajustement applique une correction de luminosité de sorte que la différence entre le facteur de correction appliqué à la portion centrale et le facteur de correction appliqué à la portion circonférentielle soit en outre accrue.

8. Procédé de commande d'affichage dans un appareil de commande de dispositif d'affichage pour commander un dispositif d'affichage en fonction d'un signal vidéo et afficher une image d'écran sur l'écran d'affichage dudit dispositif d'affichage, le procédé de commande d'affichage comprenant :

une étape de détection pour détecter un niveau de luminosité de l'image d'écran dudit signal vidéo en tant que niveau de luminosité de zone pour chacune d'une pluralité de zones d'affichage sur ledit écran d'affichage et pour calculer un niveau de luminosité d'une portion centrale comprenant au moins l'une desdites zones et d'une portion circonférentielle par rapport à ladite portion centrale comprenant au moins l'une desdites zones ; et

une étape de commande d'ajustement pour comparer lesdits niveaux de luminosité de portion entre eux et commander ledit dispositif d'affichage par un signal de commande représentant ladite image d'écran dont la luminosité a été corrigée en fonction de la différence entre les niveaux de luminosité de portion calculés, dans lequel :

lorsque le niveau de luminosité calculé d'une portion est supérieur au niveau de luminosité calculé de l'autre portion, la section de commande d'ajustement ajuste ledit signal vidéo de manière à accroître la luminosité de la portion de niveau de luminosité calculé supérieur tout en réduisant la luminosité de l'autre portion.

# FIG.1

VIDEO SIGNAL

GAIN VARYING SECTION 11

PANEL DRIVING SECTION 12

DISPLAY PANEL 13

(Dj)

(Xi, Yi)

BLOCK BRIGHTNESS DETECTING SECTION 14

CORRECTION CHARACTERIS-TIC CONTROL SECTION 15

10

EP 1 591 990 B1

# FIG.2

EP 1 591 990 B1

DISPLAY SCREEN

| APLUL | | | | APLUR |
|-------|--|--|--|-------|
| | | | | |
| | | APLC | | |
| | | | | |
| APLLL | | | | APLLR |

# FIG.3

(a)

DISPLAY SCREEN

BRIGHTNESS GAIN

SCREEN HORIZONTAL
DIRECTION

(b)

DISPLAY SCREEN

BRIGHTNESS GAIN

SCREEN HORIZONTAL
DIRECTION

NO CORRECTION-
CHARACTERISTIC CHANGE

EP 1 591 990 B1

# FIG.4

(a)

DISPLAY SCREEN

(b)

DISPLAY SCREEN

BRIGHTNESS GAIN

SCREEN HORIZONTAL
DIRECTION

BRIGHTNESS GAIN

SCREEN HORIZONTAL
DIRECTION

WITH CORRECTION-
CHARACTERISTIC CHANGE

# FIG.5

(a)

DISPLAY SCREEN

(b)

DISPLAY SCREEN

BRIGHTNESS GAIN

SCREEN HORIZONTAL
DIRECTION

BRIGHTNESS GAIN

SCREEN HORIZONTAL
DIRECTION

WITH CORRECTION-
CHARACTERISTIC CHANGE

EP 1 591 990 B1

# FIG.6

BRIGHTNESS GAIN

DISPLAY SCREEN

VERTICAL DIRECTION

BRIGHTNESS GAIN

HORIZONTAL DIRECTION

EP 1 591 990 B1

# FIG.7

EP 1 591 990 B1

BRIGHTNESS
GAIN

DISPLAY SCREEN

VERTICAL
DIRECTION

BRIGHTNESS
GAIN

HORIZONTAL DIRECTION

FIG.8

# FIG.9

EP 1 591 990 B1

(a)

DISPLAY SCREEN

(b)

DISPLAY SCREEN

APLcenter < APLlocal

BRIGHTNESS GAIN

SCREEN HORIZONTAL
DIRECTION

**EP 1 591 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3115727 B
- EP 1265213 A
- JP 7210109 A
- JP 11219152 A
- EP 08880004 A
- JP 06282241 B